# EUROPÄISCHE PATENTSCHRIFT

(11) **EP 3 148 756 B1**
(45) Veröffentlichungstag und Bekanntmachung des Hinweises auf die Patenterteilung: **18.07.2018**
(21) Anmeldenummer: 15729097.4
(22) Anmeldetag: 01.06.2015
(51) Int. Cl.: B25J 15/02, B25J 19/06, B25J 15/00

(54) **GREIFBACKENABSICHERUNG MIT NUT UND FEDER FÜR MRK**
GRIPPING JAW SAFETY DEVICE WITH TONGUE AND GROOVE FOR HRC
DISPOSITIF DE SÉCURITÉ DE MÂCHOIRES DE PRÉHENSION COMPRENANT UNE RAINURE ET UNE LANGUETTE POUR UNE COLLABORATION HOMME-ROBOT

(30) Priorität: 02.06.2014 DE 102014210331
(43) Veröffentlichungstag der Anmeldung: 05.04.2017
(73) Patentinhaber: KUKA Systems GmbH, 86165 Augsburg (DE)
(72) Erfinder: STOCKSCHLÄDER, Julian, 86152 Augsburg (DE); BOZADA, Zafer, 86899 Landsberg (DE); MARIS, Tuncay, 86161 Augsburg (DE)
(74) Vertreter: Mader, Joachim
(86) Internationale Anmeldenummer: PCT/EP2015/062132
(87) Internationale Veröffentlichungsnummer: WO 2015/185496

(56) Entgegenhaltungen:
- DE-A1-102011 119 784
- JP-A- S6 039 090
- US-A- 4 518 187
- US-A- 4 557 661

## Beschreibung

### 1. Gebiet der Erfindung

Die Erfindung betrifft eine Greifvorrichtung, die insbesondere als Effektor für einen Industrieroboter vorgesehen ist, und die mit einer mechanischen Sicherung ausgerüstet ist, sowie ein Robotersystem umfassend eine derartige Greifvorrichtung, sowie ein Verfahren zum Ergreifen von mit Hohlräumen versehenen Werkstücken.

### 2. Hintergrund

Industrieroboter sind programmierbare Maschinen, die ausgebildet sind zur automatischen Handhabung oder Bearbeitung von Gegenständen bzw. Werkstücken. Ein typischer Vertreter sind sogenannte Gelenkroboter, die über eine Mehrzahl von Gliedern verfügen, die über Gelenke miteinander verbunden sind. In einfachster Form weist ein derartiger Industrieroboter ein Gestell auf, auf dem drehbar ein sogenanntes Karussell eingerichtet ist. An dem Karussell ist über ein weiteres Drehgelenk ein erster Arm des Roboters befestigt, der auch als Schwinge bezeichnet wird. An dieser Schwinge wird über ein weiteres Drehgelenk ein weiterer Arm angeordnet, der an seinem freien Ende mit einer Aufnahme für ein Werkzeug versehen ist. Das Werkzeug wird auch als Effektor bezeichnet. Je nach Einsatzzweck des Industrieroboters können unterschiedliche Werkzeuge vorgesehen sein, so dass die Industrieroboter eine Vielzahl von Einsatzgebieten haben können, wie etwa die Handhabung und den Transport von Gegenständen und Werkstücken, die Bearbeitung von Werkstücken, Messaufgaben etc.. Zur Handhabung von Gegenständen bzw. Werkstücken ist eine Vielzahl von Greifwerkzeugen für Roboter vorbekannt.

Beispielsweise ist aus der EP 1 943 064 B1 ein Robotergreifer vorbekannt, der als Effektor eines Roboterarms vorgesehen ist oder an Endbereichen von Linear- oder Rotationsantrieben angebracht werden kann. Der vorbekannte Greifer umfasst wenigstens einen Rahmen und ein daran angeordnetes Aktuatorelement, das wenigstens zwei Greiferbacken bzw. Klemmbacken aufweist, die über eine Gelenkeinheit betätigt werden können. Das Aktuatorelement ist faltenbalgartig ausgebildet und kann mit einem Medium befüllt werden, wodurch es sich ausdehnt und über ein geeignetes Kraftübertragungselement auf die Klemmbacken einwirkt, um diese relativ zueinander zu bewegen, um Gegenstände greifen zu können. Der Greifer selbst weist dabei keine Sicherungseinrichtungen auf, die etwa verhindern könnten, dass ein Mensch, der mit dem entsprechenden Roboter zusammenarbeitet, von dem Greifer verletzt, insbesondere gequetscht wird. Im geöffneten Zustand der Klemmbacken des vorbekannten Greifers ist es nämlich möglich, dass unbeabsichtigt Gegenstände oder auch Körperteile einer Person in den Raum zwischen den beiden Klemmbacken eingeführt werden. Wenn zu diesem Zeitpunkt der Aktuator betätigt wird, können die Klemmbacken bei ihrer Bewegung schwere Verletzungen verursachen.

Das Dokument DE 10 2011 1197 84 A1 betrifft eine fluidbetätigte Greifvorrichtung, die zwei relativ aufeinander zu beweglich eingerichtete Klemmbacken umfasst, und die eine Sicherungsvorrichtung aufweist, die die Verletzungsgefahr durch unbeabsichtigtes Einführen von Körperteilen in den Raum zwischen den Klemmbacken verringert. Aufgabe der Erfindung ist es daher eine verbesserte Greifvorrichtung, insbesondere zum Einsatz mit einem Industrieroboter zu schaffen, die sicherer zu handhaben ist und mit der die Gefahr von Verletzungen von Personen beim Betrieb der Vorrichtung verringert ist. Eine weitere Aufgabe ist es ein sicherungstechnisch verbessertes Robotersystem zu schaffen, sowie ein Verfahren bereitzustellen, um Gegenstände mit Hohlräumen besser und sicherer zu ergreifen. Diese Aufgaben werden mit einer Greifvorrichtung gemäß Anspruch 1, einem Robotersystem gemäß Anspruch 10 und einem Verfahren gemäß Anspruch 11 gelöst.

### 3. Ausführliche Beschreibung der Erfindung

Die erfindungsgemäße Greifvorrichtung ist insbesondere als Effektor für einen Industrieroboter vorgesehen und umfasst erste und zweite Klemmbacken, die relativ aufeinander zu beweglich eingerichtet sind, um ein Werkstück zu greifen. Bei der relativen Bewegung aufeinander zu der beiden Klemmbacken kann es zu ernsthaften Verletzungen von Personen kommen, wenn beispielweise ein Körperteil zwischen die beiden Klemmbacken gerät, wie z. B. ein/die Finger eines Arbeiters. Um diese Gefahr zu verhindern ist erfindungsgemäß vorgesehen die erste Klemmbacke mit einem Federvorsprung zu versehen. Unter Federvorsprung wird hierin in allgemeinster Form eine Feder im Sinne einer Nut-Feder-Verbindung verstanden. Der Federvorsprung ist auf derjenigen Seite der Klemmbacke angeordnet, die in der Greifvorrichtung zur zweiten Klemmbacke hinweist. Entsprechend weist diese zweite Klemmbacke an der zur ersten Klemmbacke weisenden Seite eine entsprechende Nut auf, in die der Federvorsprung eintauchen kann. Im vollständig zueinander bewegten Zustand der Klemmbacken ist der Federvorsprung zumindest teilweise in dieser Nut aufgenommen, so dass die beiden Klemmbacken trotz des Federvorsprungs einen großen Bewegungsbereich haben. Im voneinander weg bewegten Zustand der Klemmbacken ist der Raum zwischen den beiden Klemmbacken durch den Federvorsprung zumindest teilweise belegt, um ein unbeabsichtigtes Einführen von Gegenständen bzw. Körperteilen in den belegten Raum zu verhindern. Hierdurch ist es nicht länger möglich unbeabsichtigt, d. h. versehentlich Gegenstände oder Körperteile in den (nunmehr) belegten Raum zu führen.

Die erfindungsgemäße Sicherung der Greifvorrichtung ist insbesondere bei Greifvorrichtungen vom Typ eines "Spreizgreifers" vorteilhaft, die dazu ausgebildet sind Werkstücke mit Hohlräumen zu greifen, indem die beiden Klemmbacken in einen Hohlraum des Werkstücks eingeführt werden und danach voneinander weg bewegt werden, bis die beiden Klemmbacken in Klemmkontakt mit den Innenwänden des Hohlraums geraten. Bei derartigen Ausführungsformen ist es generell bevorzugt, dass die ersten und zweiten Klemmbacken jeweils zugehörige Greifflächen aufweisen, die an denjenigen Seiten der Klemmbacken angeordnet sind, die von der jeweils anderen Klemmbacke wegweisen. Anders gesagt, sind die Greifflächen vorzugsweise an derjenigen Seite der Klemmbacke vorgesehen, die der Seite der jeweiligen Klemmbacke wo der Federvorsprung bzw. die Nut vorgesehen ist, gegenüber liegt.

In einer bevorzugten Ausführungsform haben die ersten und zweiten Klemmbacken jeweils zugehörige Greifflächen zum Greifen von Werkstücken und diese Greifflächen sind konvex gerundet. Eine derartige konvexe Rundung ist insbesondere im oben beschriebenen Fall vorteilhaft, bei dem die Klemmbacken in den Hohlraum eines Werkstücks eingeführt werden, da die konvexe Rundung eine Selbstzentrierung der Klemmbacken bzw. der Greifvorrichtung im Hohlraum des Werkstücks ermöglicht, insbesondere dann, wenn der Hohlraum runde Innenwände hat.

Allgemein bevorzugt sind die Greifflächen der Klemmbacken mit Mitteln ausgestattet, die ein Abrutschen von Werkstücken von den Greifflächen verhindern bzw. diesem entgegenwirken. Besonders bevorzugt sind daher die Greifflächen der Klemmbacken zumindest teilweise mit einem Antirutschmaterial ausgerüstet, und insbesondere gummiert.

In einer bevorzugten Ausführungsform weist die Greifvorrichtung weiter ein Gehäuse auf, in dem die Klemmbacken geführt sind. Das Gehäuse ist weiter vorzugsweise mit einem geeigneten Aktuator versehen, insbesondere einen hydraulisch oder pneumatisch betriebenen Aktuator, mit dem die beiden Klemmbacken bewegt werden. Das Gehäuse ist zudem vorzugsweise mit Befestigungsmitteln versehen, mit denen das Gehäuse inklusive dem Aktuator und der Greifvorrichtung an dem Arm eines Industrieroboters befestigt werden kann.

Vorzugsweise sind die Klemmbacken der Greifvorrichtung im Wesentlichen stabförmig ausgebildet und verlaufen parallel zueinander, wobei sich der Federvorsprung und die zugehörige Nut entlang der Längsachse der stabförmigen Klemmbacken erstrecken.

In den meisten Anwendungsfällen genügt ein entsprechend dimensionierter Federvorsprung, jedoch ist es im Rahmen der Erfindung auch denkbar zwei oder mehr derartige Federvorsprünge vorzusehen, die beispielsweise in einer Linie angeordnet sind, solange die Abstände zwischen den Federvorsprüngen klein genug sind, um das unbeabsichtigte Einführen von Körperteilen dazwischen zu verhindern. Die hierin verwendete Formulierung, dass die Klemmbacke einen Federvorsprung aufweist, ist mithin so zu verstehen, dass sie zumindest einen Federvorsprung aufweist.

Die oben beschriebene stabförmige Ausbildung der Klemmbacken hat den Vorteil, dass sie es ermöglicht, dass sich der Federvorsprung und die zugehörige Nut über die komplette außerhalb des Gehäuses liegende Länge der Klemmbacken erstrecken können, d. h. zu 100%. Für die Zwecke der Erfindung, nämlich Greifvorrichtungen sicherer auszubilden, kann es jedoch bereits genügen, wenn sich Federvorsprung und zugehörige Nut über zumindest 80% der Länge der Klemmbacken erstrecken, vorzugsweise zu mindestens 90%, mehr bevorzugt zu mindestens 95%, jedoch wie erwähnt am meistens bevorzugt zu 100%.

Die vorliegende Erfindung betrifft auch ein Robotersystem, wie insbesondere einen Industrieroboter, wie etwa einen Gelenkroboter, der zumindest einen Roboterarm umfasst. Der Roboterarm ist mit einer Greifvorrichtung gemäß der vorliegenden Erfindung versehen, wodurch ein sicherungstechnisch verbessertes Robotersystem bereitgestellt wird, das insbesondere eine sicherere Mensch-Roboter-Kollaboration (MRK) ermöglicht.

Die Erfindung betrifft zudem ein verbessertes Verfahren zum Ergreifen von mit Hohlräumen versehenen Werkstücken, welches durch die Verwendung einer erfindungsgemäßen Greifvorrichtung ermöglicht wird. Das Verfahren basiert auf einem Robotersystem, wie es oben dargestellt wurde, um Werkstücke mit Hohlräumen zu ergreifen. Hierzu werden in einem ersten Schritt die beiden Klemmbacken der Greifvorrichtung zumindest teilweise aufeinander zu bewegt und anschließend mittels des Roboterarms in den Hohlraum eines zu bewegenden Werkstücks eingeführt. Anschließend werden die beiden Klemmbacken wieder auseinander gefahren bis die Klemmbacken in Kontakt mit den Wänden des Hohlraums treten und das Werkstück somit sicher gegriffen wird. Anschließend kann das gegriffene Werkstück bewegt werden und beispielsweise mittels des Roboters zu einem gewünschten Ort geführt werden. An diesem Ort werden die beiden Klemmbacken wieder aufeinander zu bewegt und aus dem Hohlraum des Werkstücks herausbewegt, wonach der Roboter bzw. das Robotersystem zur Ergreifung eines weiteren Werkstücks bereit ist.

### 4. Beschreibung von bevorzugten Ausführungsformen

Weitere vorteilhafte Ausgestaltungen der Erfindung werden im Zusammenhang mit den nachstehend wiedergegeben Figuren erläutert. Dabei zeigt:
- Figur 1: eine schematische dreidimensionale Ansicht einer erfindungsgemäßen Greifvorrichtung mit teilweise geöffnetem Gehäuse;
- Figur 2: die Greifvorrichtung von Figur 1 mit geschlossenem Gehäuse; und
- Figur 3: die Ansicht von Figur 2, wenn die beiden Klemmbacken zueinander bewegt sind.

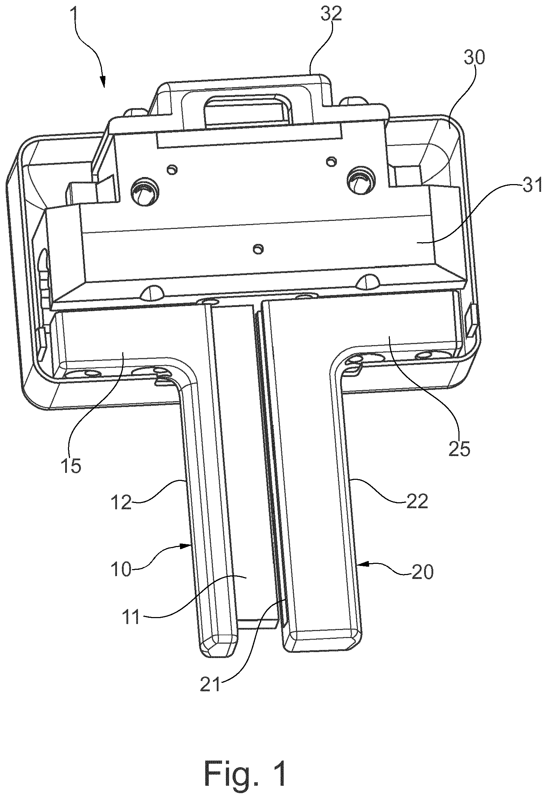

Figur 1 zeigt eine erfindungsgemäße Greifvorrichtung 1 in einer schematischen dreidimensionalen Ansicht bei teilweise geöffnetem Gehäuse 30. Die Greifvorrichtung 1 hat zwei relativ aufeinander zu beweglich eingerichtete Klemmbacken 10 und 20. Wie der Fachmann erkennt, ist die in den Figuren gezeigte Greifvorrichtung 1 ein Spreizgreifer, der dazu ausgebildet ist in den Innenraum oder Hohlraum von Werkstücken eingeführt zu werden und diese durch ein Auseinanderbewegen oder Spreizen der beiden Klemmbacken 10 und 20 zu ergreifen. Die beiden Klemmbacken sind stabförmig ausgebildet und verlaufen parallel zueinander. Die erste Klemmbacke 10 weist an der Seite, die zur zweiten Klemmbacke 20 weist, einen Federvorsprung 11 auf. Der Federvorsprung 11 ist integral mit der Klemmbacke 10 ausgebildet, kann jedoch auch ein separates Teil sein, das an der ersten Klemmbacke 10 angeordnet oder befestigt ist. Die zweite Klemmbacke 20 weist an der zur ersten Klemmbacke weisenden Seite eine Nut auf, die zur Aufnahme des Federvorsprungs 11 ausgebildet ist. In der in Figur 1 gezeigten Anordnung sind die beiden Klemmbacken voneinander weg bewegt, d. h. in ihrer zueinander am weitest entfernten Stellung gezeigt. Man erkennt, dass der an sich freie Raum zwischen den beiden Klemmbacken durch den Federvorsprung 11 beinahe vollständig belegt ist. In der in Figur 1 gezeigten "offenen" Stellung der Klemmbacken ist damit ein unbeabsichtigtes Einführen von Gegenständen oder Körperteilen in den belegten Raum unterbunden. In Figur 1 ist hierbei im komplett geöffneten Zustand noch ein Spalt zwischen Nut 21 und Federvorsprung 11 vorhanden. In einer bevorzugten Ausführungsform, kann dieser Spalt im komplett geöffnetem Zustand auch geschlossen sein, sodass der Federvorsprung 11 im komplett geöffneten Zustand bereits in die Nut 21 eingreift bzw. teilweise von der Nut 21 aufgenommen ist.

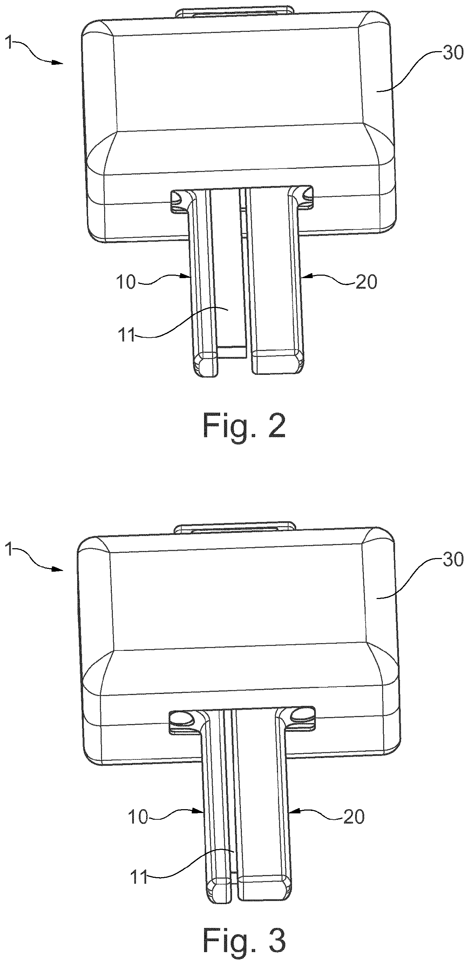

Auch ist die Tiefenausdehnung des Federvorsprungs 11 geringer als die Tiefenausdehnung der Klemmbacke 10, sodass dennoch eine geringe Möglichkeit besteht, dass ein Eingriff/Quetschen zwischen einem dadurch entstandenen Absatz und der gegenüberliegenden Innenseite der Klemmback 20 entstehen kann. Hierbei wird bevorzugt die Tiefenausdehnung des Federvorsprungs 11 möglichst nahe an die Tiefenausdehnung der Klemmbacke 10 angepasst, sodass der Absatz möglichst gering ist.
Die erste Klemmbacke 10 weist eine Greiffläche 12 auf, und zwar an der Seite der Klemmbacke 10, die von der anderen Klemmbacke 20 weg weist, d. h. abgewandt ist. Analog weist die zweite Klemmbacke 20 an der Seite, die von der ersten Klemmbacke weg weist eine Greiffläche 22 auf. Beide Greifflächen sind konvex gerundet. Beim Einführen der beiden Klemmbacken 10 und 20 in beispielsweise den Hohlraum eines zu bewegenden Gegenstands sind die beiden Klemmbacken zueinander bewegt, wie es in Figur 3 gezeigt ist. Nach Einführen der Klemmbacken in den Hohlraum werden die beiden Klemmbacken wieder voneinander weg bewegt, bis sie die in Figuren 1 und 2 gezeigte Position erreicht haben. In dieser Position sind die Greifflächen 12 und 22 in Kontakt mit den Innenwänden des Hohlraums des Werkstücks, sodass das Werkstück mit den Klemmbacken verklemmt wird und mit der Greifvorrichtung gegriffen ist, sollte die Öffnung jedoch kleiner sein als der maximale Durchmesser, der durch ein komplettes geöffnet sein der Greifbacken gegriffen werden kann, können solche Öffnungen ebenso gegriffen werden, wobei dabei entsprechend keine komplette, sondern eine abgestimmte und/oder angepasste Öffnung der Greifbacken erfolgt bzw. durchführbar ist. Die konvexen Rundungen der Greifflächen 12 und 22 erlauben eine Selbstzentrierung der Klemmbacken im Hohlraum des Werkstücks und ermöglichen einen besonders sicheren Griff des Werkstücks. Während die erfindungsgemäße Sicherung der Greifvorrichtung durch einen entsprechenden Federvorsprung bei dem gezeigten Typ von Spreizgreifer besonders wirkungsvoll ist, ist die Erfindung natürlich nicht auf Spreizgreifer beschränkt, sondern kann auch bei anderen Typen von Greifern wirkungsvoll zum Einsatz kommen. Beispielsweise kann die in den Figuren gezeigte Greifvorrichtung auch Gegenstände ergreifen, in dem die beiden Klemmbacken zueinander verfahren werden, indem nämlich Gegenstände mit der Spitze der beiden stabförmigen Klemmbacken 10 und 20 verklemmt werden. Aus diesem Grund erstreckt sich in der gezeigten Ausführungsform der Federvorsprung 11 nicht über die gesamte Länge der stabförmigen Klemmbacken sondern nur zu etwa 95% und endet kurz vor der Spitze bzw. dem freien Ende der Klemmbacke 10. Der verbleibende Freiraum zwischen den beiden Klemmbacken 10 und 20, der nicht durch den Federvorsprung 11 belegt ist, ist in der Praxis zu klein als dass ein Körperteil darin eingeführt und verklemmt werden könnte, aber er ist ausreichend groß um entsprechend geformte (kleine) Werkstücke zu greifen.

Im Gehäuse 30 der Greifvorrichtung 1 ist weiter ein Aktuator 31 vorgesehen, mit dem die beiden Klemmbacken betätigt bzw. bewegt werden können. Der Aktuator kann beispielsweise ein Elektromotor sein, arbeitet jedoch vorwiegend mit einer hydraulischen oder pneumatischen Energiequelle. Am Kopf des Gehäuses 30 sind weiter Befestigungsmittel 32 zur Befestigung der Greifvorrichtung 1 an einem Roboterarm vorgesehen.

Die beiden stabförmigen Klemmbacken 10, 20 weisen an ihrem gehäuseseitigen Ende einen Fuß 15 bzw. 25 auf, mit dem die Klemmbacken im bzw. am Gehäuse geführt sind. In der dargestellten Ausführungsform schließen sich die Füße an dem gehäuseseitigen Ende der stabförmigen Klemmbacken an und stehen in einem rechten Winkel von den stabförmigen Klemmbacken ab. Sie können, wie gezeigt, mit den Klemmbacken integral ausgebildet sein oder aber separate Elemente sein, die an den gehäuseseitigen Enden der Klemmbacken befestigt sind, beispielsweise durch eine Schraubverbindung. Falls gewünscht, können die konvex gerundeten Greifflächen 12 und 22 zudem mit einem Antirutschmaterial ausgerüstet sein, und insbesondere gummiert sein.

Wie es in Figur 1 gezeigt ist, sind die beiden Klemmbacken stabförmig ausgebildet und verlaufen parallel zueinander, wobei sich der Federvorsprung 11 und die zugehörige Nut 21 entlang der Längsachse der Klemmbacken erstrecken. In der gezeigten Ausführungsform ist genau ein Federvorsprung 11 und genau eine Nut 21 vorgesehen, jedoch ist die vorliegende Erfindung nicht auf derartige Ausführungsformen beschränkt, sondern es können auch beispielsweise zwei oder mehr Federvorsprünge 11 vorgesehen sein. Insbesondere ist es denkbar, dass der Federvorsprung 11 aus zwei oder mehr Federvorsprüngen gebildet ist, die sich in einer Linie befinden, sodass Lücken zwischen den einzelnen Federvorsprüngen vorliegen. Dies kann fertigungstechnische Vorteile haben, ohne dass die Sicherungsfunktion des Federvorsprungs verringert ist, sofern die einzelnen Lücken zwischen den Vorsprüngen nicht zu groß sind. Im gezeigten Ausführungsbeispiel erstreckt sich der Federvorsprung 11 über etwa 95% der außerhalb des Gehäuses liegenden Länge der stabförmigen Klemmbacken, sodass an der Spitze der beiden stabförmigen Klemmbacken 10 und 20, d. h. dem freien Ende der Klemmbacken, weitere Greifflächen vorgesehen sein können, die einen Gegenstand beim zueinander Bewegen der beiden Klemmbacken greifen können. Besonders sicher ist die Konstruktion jedoch, wenn sich Federvorsprung und zughörige Nut über die gesamte außerhalb des Gehäuses liegende Länge der stabförmigen Klemmbacken erstrecken, d. h. zu 100%. In der gezeigten Ausführungsform erstrecken sich der Federvorsprung 11 und die Nut 21 auch in die Teile der Klemmbacken 10, 11, die innerhalb des Gehäuses 30 angeordnet sind. Dies hat fertigungstechnische Gründe und ist für die Sicherheit der Konstruktion nicht erforderlich, da der im Gehäuse liegende Teil der Klemmbacken durch das Gehäuse selbst gesichert ist, wie es in den Figuren 2 und 3 zu erkennen ist.

Figur 2 zeigt die Greifvorrichtung 1 mit geschlossenem Gehäuse 30 in einer schematischen dreidimensionalen Ansicht. Die beiden Klemmbacken 10 und 20 sind voneinander weg bewegt, d. h. in ihrer vollgespreizten Stellung gezeigt. Der Federvorsprung 11 belegt den Raum zwischen den beiden Klemmbacken nahezu vollständig, sodass ein unbeabsichtigtes Einführen von Gegenständen und insbesondere Körperteilen in den belegten Raum wirkungsvoll unterbunden ist. Der längliche verbleibende Spalt zwischen dem Federvorsprung 11 und der zweiten Klemmbacke 20 der in Figur 2 zu erkennen ist, ist zu klein als dass ein Körperteil hier eingeführt werden könnte.

In Figur 3 ist die Greifvorrichtung der Figur 2 erneut gezeigt, wobei diesmal die beiden Klemmbacken 10 und 20 vollständig aufeinander zu bewegt sind. Der Federvorsprung 11 ist in die entsprechende Nut 21 geführt. Die Relativbewegung der beiden Klemmbacken von der Position in Figur 2 zu der Position in Figur 3 würde ohne den Federvorsprung 11 eine Gefahr darstellen, insbesondere wenn die Greifvorrichtung an einem Roboter vorgesehen ist, der autonom arbeitet, da die Greifvorrichtungen selbst in der Regel nicht mit den entsprechenden Sensoren ausgerüstet sind, mit denen erkannt werden könnte, ob ein Gegenstand oder Körperteil unbeabsichtigt in dem freien Raum zwischen den beiden Klemmbacken 10 und 20 eingeführt ist. Der erfindungsgemäße Federvorsprung 11 der Greifvorrichtung 1 erlaubt somit die Konstruktion von sicherungstechnisch verbesserten Robotersystemen.

Hierbei ist in Figur 3 zu erkennen, dass der Federvorsprung 11 nicht vollständig in die Nut 21 geführt ist, jedoch ist auch eine Ausgestaltung möglich, in der im komplett geschlossenen Zustand der Klemmbacken 10 und 20 der Federvorsprung 11 komplett in der Nut 21 angeordnet bzw in diese geführt ist.

Wie in allen Figuren 1-3 ersichtlich ist des Weiteren wenigstens eine, bevorzugt jedoch alle entstandenen Kante/-n der Klemmbacken 10 und 20 abgerundet und/oder abgeschrägt ausgeführt, sodass keine scharfen und/oder spitzen Kanten entstehen bzw. vorhanden sind, an welchen eine Verletzung eines Arbeiters stattfinden kann. Bevorzugt weist auch der Federvorsprung 11 und/oder die Nut 21 im Wesentlichen abgerundete und/oder abgeschrägte Kanten auf.

### Bezugszeichenliste:

- 1: Greifvorrichtung
- 10: erste Klemmbacke
- 11: Federvorsprung
- 12: Greiffläche
- 15: Fuß
- 20: zweite Klemmbacke
- 21: Nut
- 22: Greiffläche
- 25: Fuß
- 30: Gehäuse
- 31: Aktuator
- 32: Befestigungsmittel

## Patentansprüche

1. Greifvorrichtung (1), insbesondere als Effektor für einen Industrieroboter, welche Greifvorrichtung umfasst:
erste (10) und zweite (20) Klemmbacken, die relativ aufeinander zu beweglich eingerichtet sind, um ein Werkstück zu greifen, wobei die erste Klemmbacke (10) einen Federvorsprung (11) an der zur zweiten Klemmbacke (20) weisenden Seite aufweist, und die zweite Klemmbacke (20) an der zur ersten Klemmbacke (10) weisenden Seite eine entsprechende Nut (21) aufweist, die den Federvorsprung (11) im zueinander bewegten Zustand der Klemmbacken (10, 20) zumindest teilweise aufnimmt, wobei im voneinander weg bewegten Zustand der Klemmbacken (10, 20) der Raum zwischen den beiden Klemmbacken (10, 20) durch den Federvorsprung (11) zumindest teilweise belegt ist, um ein unbeabsichtigtes Einführen von Gegenständen bzw. Körperteilen in den belegten Raum zu verhindern.

2. Greifvorrichtung (1) nach Anspruch 1, wobei die ersten und zweiten Klemmbacken (10, 20) jeweils zugehörige Greifflächen (12, 22) aufweisen, wobei die Greiffläche an der jeweiligen Seite der Klemmbacke angeordnet ist, die von der anderen Klemmbacke weg weist, so dass die Greifvorrichtung als Spreizgreifer das Greifen von Werkstücken mit Hohlräumen erlaubt.

3. Greifvorrichtung (1) nach einem der vorhergehenden Ansprüche, wobei die ersten und zweiten Klemmbacken (10, 20) jeweils zugehörige Greifflächen (12, 22) aufweisen und diese Greifflächen konvex gerundet sind.

4. Greifvorrichtung nach einem der vorhergehenden Ansprüche, wobei die ersten und zweiten Klemmbacken (10, 20) jeweils zugehörige Greifflächen aufweisen und diese Greifflächen mit einem AntirutschMaterial ausgerüstet sind, insbesondere gummiert sind.

5. Greifvorrichtung (1) nach einem der vorhergehenden Ansprüche, wobei die Vorrichtung (1) ein Gehäuse (30) aufweist und die Klemmbacken (10, 20) in diesem Gehäuse geführt sind.

6. Greifvorrichtung (1) nach dem vorhergehenden Anspruch, wobei das Gehäuse (30) einen Aktuator (31) aufweist, insbesondere einen hydraulisch, elektrisch oder pneumatisch betriebenen Aktuator.

7. Greifvorrichtung (1) nach einem der vorhergehenden Ansprüche, wobei die Vorrichtung (1) ein Gehäuse (30) aufweist und die Klemmbacken (10, 20) in diesem Gehäuse (30) geführt sind, wobei die Klemmbacken (10, 20) stabförmig ausgebildet sind und parallel zueinander verlaufen und wobei Federvorsprung (11) und zugehörige Nut (12) sich entlang der Längsachse der stabförmigen Klemmbacken (10, 20) erstrecken.

8. Greifvorrichtung (1) nach dem vorhergehenden Anspruch, wobei sich Federvorsprung (11) und zugehörige Nut (12) über zumindest 80% der außerhalb des Gehäuses (30) liegenden Länge der stabförmigen Klemmbacken (10, 20) erstrecken, vorzugsweise zumindest 90%, mehr bevorzugt zumindest 95% und am meisten bevorzugt 100%.

9. Greifvorrichtung nach dem vorhergehenden Anspruch, wobei die stabförmigen Klemmbacken (10, 20) an ihrem gehäuseseitigen Ende einen Fuß (15, 25) aufweisen, wobei der Fuß rechtwinklig von den stabförmigen Klemmbacken (10, 20) hervorsteht und in dem Gehäuse (30) geführt ist.

10. Robotersystem, umfassend einen Roboterarm, wobei der Roboterarm mit einer Greifvorrichtung (1) gemäß einem der vorhergehenden Ansprüche versehen ist.

11. Verfahren zum Ergreifen von mit Hohlräumen versehenen Werkstücken, umfassend die folgenden Schritte:
- Bereitstellen eines Robotersystems nach Anspruch 10;
- zumindest teilweises aufeinander zubewegen der ersten und zweiten Klemmbacken (10, 20);
- Einführen der beiden aufeinander zubewegten Klemmbacken (10, 20) in den Hohlraum eines Werkstücks;
- Auseinanderfahren der beiden Klemmbacken (10, 20) bis die beiden Klemmbacken in Kontakt mit den Innenwänden des Hohlraums treten und das Werkstück somit gegriffen wird;
- Bewegen des gegriffenen Werkstücks.

## Claims

1. Gripping device (1), in particular, as an effector for an industrial robot, said gripping device comprising:
first (10) and second (20) clamping jaws, which are arranged so as to be moveable relative towards each other, in order to grasp a workpiece, wherein the first clamping jaw (10) has a tongue projection (11) on the side that faces the second clamping jaw (20); and the second clamping jaw (20) has on the side facing the first clamping jaw (10) a corresponding groove (21), which at least partially accommodates the tongue projection (11) in the state, in which the clamping jaws (10, 20) are moved towards each other, wherein in the state, in which the clamping jaws (10, 20) are moved away from each other, the space between the two clamping jaws (10, 20) is at least partially occupied by the tongue projection (11), in order to prevent an inadvertent insertion of objects or body parts into the occupied space.

2. Gripping device (1) as claimed in claim 1, wherein the first and second clamping jaws (10, 20) have in each case associated gripping surfaces (12, 22), wherein the gripping surface is disposed on the respective side of the clamping jaw that faces away from the other clamping jaw, so that the gripping device allows, as a spreading gripper, the grasping of workpieces having hollow spaces.

3. Gripping device (1) as claimed in any one of the preceding claims, wherein the first and second clamping jaws (10, 20) have each associated gripping surfaces (12, 22), wherein these gripping surfaces are convexly rounded.

4. Gripping device (1) as claimed in any one of the preceding claims, wherein the first and second clamping jaws (10, 20) have each associated gripping surfaces, and wherein these gripping surfaces are equipped with an anti-slip material, and are in particular rubberized.

5. Gripping device (1) as claimed in any one of the preceding claims, wherein the device (1) comprises a housing (30), and the clamping jaws (10, 20) are guided in this housing.

6. Gripping device (1) as claimed in the preceding claim, wherein the housing (30) has an actuator (31), in particular a hydraulically, electrically or pneumatically operated actuator.

7. Gripping device (1) as claimed in any one of the preceding claims, wherein the device (1) comprises a housing (30), and the clamping jaws (10, 20) are guided in this housing (30), wherein the clamping jaws (10, 20) are designed so as to be rod-shaped and extend parallel to each other, and wherein the tongue projection (11) and the associated groove (12) extend along the longitudinal axis of the rod-shaped clamping jaws (10, 20).

8. Gripping device (1) as claimed in the preceding claim, wherein the tongue projection (11) and associated groove (12) extend over at least 80% of the length of the rod-shaped clamping jaws (10, 20), with said length lying outside of the housing (30), preferably at least 90%, more preferably at least 95%, and most preferably 100%.

9. Gripping device (1) as claimed in the preceding claim, wherein the rod-shaped clamping jaws (10, 20) have a foot (15, 25) on their housing-sided end, wherein the foot projects at right angles from the rod-shaped clamping jaws (10, 20) and is guided in the housing (30).

10. Robotic system comprising a robot arm, wherein the robot arm is provided with a gripping device (1) in accordance with any one of the preceding claims.

11. Method for grasping workpieces, provided with hollow spaces, said method comprising the following steps:
- providing a robotic system in accordance with claim 10;
- moving the first and second clamping jaws (10, 20) at least partially towards each other;
- inserting the two clamping jaws (10, 20), which have been moved towards each other, into the hollow space of a workpiece;
- moving the two clamping jaws (10, 20) apart from each other until the two clamping jaws come into contact with the inner walls of the hollow space and, in so doing, the workpiece is grasped;
- moving the grasped workpiece.

## Revendications

1. Dispositif de préhension (1), en particulier en tant qu'effecteur pour un robot industriel, ledit dispositif de préhension comprenant :
des première (10) et seconde (20) mâchoires de serrage qui sont agencées pour se mouvoir l'une vers l'autre afin de prendre une pièce, la première mâchoire de serrage (10) comportant une languette élastique (11) sur le côté tourné vers la seconde mâchoire de serrage (20), et la seconde mâchoire de serrage (20) comportant, sur le côté tourné vers la première mâchoire de serrage (10), une gorge correspondante (21) qui reçoit au moins en partie la languette élastique (11) à l'état rapproché des mâchoires de serrage (10, 20), l'espace entre les deux mâchoires de serrage (10, 20) étant occupé au moins en partie par la languette élastique (11) à l'état éloigné des mâchoires de serrage (10, 20) afin d'empêcher l'introduction accidentelle d'objets, respectivement de parties du corps dans l'espace occupé.

2. Dispositif de préhension (1) selon la revendication 1, les première et seconde mâchoires de serrage (10, 20) comportant chacune des surfaces de préhension respectivement associées (12, 22), la surface de préhension étant disposée sur le côté respectif de la mâchoire de serrage qui est opposé à l'autre mâchoire de serrage, de sorte que le dispositif de préhension permet, en tant que préhenseur par écartement, de prendre des pièces pourvues de cavités.

3. Dispositif de préhension (1) selon une des revendications précédentes, les première et seconde mâchoires de serrage (10, 20) comportant des surfaces de préhension respectivement associées (12, 22), et ces surfaces de préhension étant arrondies de manière convexe.

4. Dispositif de préhension selon une des revendications précédentes, les première et seconde mâchoires de serrage (10, 20) comportant des surfaces de préhension respectivement associées, et ces surfaces de préhension sont équipées de matériau antidérapant, en particulier sont caoutchoutées.

5. Dispositif de préhension (1) selon une des revendications précédentes, le dispositif (1) comportant un boîtier (30), et les mâchoires de serrage (10, 20) étant guidées dans ce boîtier.

6. Dispositif de préhension (1) selon la revendication précédente, le boîtier (30) comportant un actionneur (31), en particulier un actionneur à commande hydraulique, électrique ou pneumatique.

7. Dispositif de préhension (1) selon une des revendications précédentes, le dispositif (1) comportant un boîtier (30), et les mâchoires de serrage (10, 20) étant guidées dans ce boîtier (30), les mâchoires de serrage (10, 20) étant conformées en barres et s'étendant parallèlement l'une à l'autre, et la languette élastique (11) et la gorge associée (12) s'étendant le long de l'axe longitudinal des mâchoires de serrage en forme de barres (10, 20).

8. Dispositif de préhension (1) selon la revendication précédente, la languette élastique (11) et la gorge associée (12) s'étendant sur au moins 80 % de la longueur des mâchoires de serrage en forme de barres (10, 20) située à l'extérieur du boîtier (30), de préférence sur au moins 90 %, plus préférentiellement sur au moins 95 % et le plus préférentiellement sur 100 %.

9. Dispositif de préhension selon la revendication précédente, les mâchoires de serrage en forme de barres (10, 20) comportant un pied (15, 25) à leur extrémité côté boîtier, le pied s'étendant à angle droit à partir des mâchoires de serrage en forme de barres (10, 20) et étant guidé dans le boîtier (30).

10. Système de robot comprenant un bras de robot, le bras de robot étant muni d'un dispositif de préhension (1) selon une des revendications précédentes.

11. Procédé pour saisir des pièces pourvues de cavités, comprenant les étapes suivantes :
- fourniture d'un système de robot selon la revendication 10 ;
- rapprochement au moins partiel des première et seconde mâchoires de serrage (10, 20) ;
- introduction des deux mâchoires de serrage rapprochées (10, 20) dans la cavité d'une pièce ;
- écartement des deux mâchoires de serrage (10, 20) jusqu'à ce que les deux mâchoires de serrage viennent en contact avec les parois intérieures de la cavité et que la pièce soit ainsi saisie ;
- déplacement de la pièce saisie.
